# EUROPEAN PATENT SPECIFICATION

(11) **EP 4 296 193 B1**
(45) Date of publication and mention of the grant of the patent: **25.06.2025**
(21) Application number: 22903552.2
(22) Date of filing: 08.12.2022
(51) Int. Cl.: B65D 81/03, B32B 1/00, B32B 3/28, B31D 5/00, B31B 170/20, B31F 1/07, B31F 5/04, B32B 29/00

(54) **PAPER CUSHIONING PACKAGING LAYER AND PACKAGING PAPER**
DÄMPFENDE VERPACKUNGSSCHICHT AUS PAPIER UND VERPACKUNGSPAPIER
COUCHE D'EMBALLAGE DE REMBOURRAGE EN PAPIER, ET PAPIER D'EMBALLAGE

(30) Priority: 10.12.2021 CN 202123095948 U
(43) Date of publication of application: 27.12.2023
(73) Proprietor: Jiangsu Ritong Machinery Technology Co., Ltd., Yancheng, Jiangsu 224222 (CN); Sun Forest Ecotechnology (Zhejiang) Co., Ltd., Ningbo, Zhejiang 315322 (CN); Tan, Minhong, Yancheng, Jiangsu 224222 (CN); Wu, Jie, Yancheng, Jiangsu 224222 (CN)
(72) Inventor: TAN, Minhong, Yancheng, Jiangsu 224222 (CN); WU, Jie, Yancheng, Jiangsu 224222 (CN); JI, Xiangmin, Yancheng, Jiangsu 224222 (CN)
(74) Representative: Ipside
(86) International application number: PCT/CN2022/137432
(87) International publication number: WO 2023/104132

(56) References cited:
- WO-A1-2013/061306
- CN-S- 306 806 317
- CN-S- 306 962 545
- CN-U- 213 924 611
- CN-U- 214 567 598
- CN-U- 216 612 261
- CN-U- 217 023 655
- GB-A- 2 446 585
- JP-A- H04 222 298
- KR-B1- 102 185 615
- US-A- 2 978 006
- US-A1- 2006 210 773
- US-A1- 2011 318 522
- US-A1- 2021 061 535

## Description

### Technical Field

The present invention is related to the field of packaging technology, and more particularly to paper buffer packaging layer and packaging paper.

### Background of the Invention

With the rapid development of logistics, packaging paper and bags are increasingly used for the transportation of goods. Most of the packaging paper and packaging bags use bubble packaging paper containing plastic, which has good cushioning and protective properties and can provide better protection for the internal packaging.

Packaging paper is widely used, such as envelopes, packaging bags, etc. Packaging paper needs to provide good sealing performance and cushioning effect. However, the existing bubble wrapping paper containing plastic also has the defects of non-degradability, environmental pollution, difficulty in recycling and the like.

At present, the bubble film packaging materials used in the market are all products made of high-pressure polyethylene as the main raw material, and then added with whitening agent, opening agent and other accessories, which are extruded into bubbles at a high temperature of about 230 degrees. The bubbles are filled with gas, and the stress is buffered by the bubbles to protect the product. Widely used in electronics, instruments, ceramics, handicrafts, household appliances, from the car, kitchen, furniture and paint products, glass products and precision instruments, such as shock-resistant cushioning packaging. It can be made into bubble bags, bubble kraft envelope bags and other products. However, the raw materials used in the production of bubble film are non-recyclable and degradable materials, which also brings tremendous pressure to the environmental protection.

Patent document GB2446585 A discloses a method for manufacturing high bulk laminated board using embossed plies that are laminated in a registered pattern to enhance uniformity, rigidity, and resistance to crushing, while reducing the likelihood of warping and production costs.

Patent document US2978006 A discloses stuffing material composed of two layers of either paper, cellulose, or synthetic material, such as resin, which are embossed or stamped with identical designs facing each other in a mirror-image fashion. These layers are glued together at their raised portions, creating air spaces that are closed on all sides, enhancing the cushioning effect. The outer surfaces of the stuffing material are covered with a few layers of cellulose wadding, which are also embossed and glued to the layers, providing the necessary softness and yieldability.

Patent document JP H04222298A discloses a method for producing embossed paper that prevents cracking and damage at the tops and bottoms of embossings by interposing a thermally meltable resin film between two sheets of paper during the embossing process.

Patent document KR102185615 B1 describes a packing bag and its manufacturing method, which is designed to protect items from damage due to external impact, prevent bursting during manufacturing, enhance cushioning, prevent dust scattering, and avoid scratches on the stored items, offering higher competitiveness than synthetic resin bags.

### Summary of the Invention

The invention is set out in the appended set of claims. The invention is advantageous in that it provides a paper buffer packaging layer and packaging paper, wherein the paper buffer packaging layer comprises multiple bubble-shaped buffer packages, providing buffering and protective effects.

Another advantage of the invention is to provide a paper buffer packaging layer and packaging paper, wherein the buffer packages of the buffer packaging layer is protruding upwards or concaving downwards, and there is a height difference between the base layer of the buffer packaging layer, so that when the buffer packaging layer is under force, the buffering package can be deformed to provide buffering effect.

Another advantage of the invention is to provide a paper buffer packaging layer and packaging paper, the buffer packages of the buffer packaging layer further include at least two rib grooves, which are formed on the inner side or outer side of the buffer packages, wherein the grooves provide support when the buffer is deformed under force, thereby improving the buffering and protective effect.

Another advantage of the invention is to provide a paper buffer packaging layer and packaging paper, wherein the rib grooves of the buffer packaging layer include horizontal grooves and vertical grooves, wherein the horizontal and vertical grooves contribute to improving the buffering effect.

The technical problem to be solved by the present invention is to provide a deformable and degradable buffering monomer structure with buffering effects.

Correspondingly, the present invention also provides a packaging paper with the deformable cushioning monomer structure and a packaging paper bag with the deformable cushioning monomer structure.

According to the present invention, the foregoing and other objects and advantages are attained by a paper packaging buffer layer, which comprises:
a base layer; and
a plurality of buffer packages and a plurality of air chambers formed in the buffer packages, wherein the plurality of buffer packages are formed on the base layer, the air chambers are formed on the inner side of the buffer packages, the buffer package includes a bottom portion and a top portion integrally extending outward from the bottom portion, the bottom portion of the buffer package integrally extending upward from the base layer to the top portion of the buffer package, wherein the buffer package is further provided with at least one rib groove, and the at least one rib groove is formed on the surface of the buffer package.

According to one embodiment of the present invention, the buffer package has a hemispherical bubble structure.

According to one embodiment of the present invention, the rib groove is formed on the outer surface of the cushion pack and recessed inward from the outer surface of the cushion pack.

According to one embodiment of the present invention, the rib groove further comprises a weft rib groove, wherein the weft rib groove is formed in the buffer package in an annular structure, and the plane of the weft rib groove is parallel to the base layer.

According to one embodiment of the present invention, the rib groove further comprises a longitudinal rib groove formed in the buffer package in a semi-annular structure, wherein a plane of the longitudinal rib groove is substantially perpendicular to the substrate.

According to one embodiment of the present invention, the spacing distance between each longitudinal rib groove is equal.

According to one embodiment of the present invention, the longitudinal rib groove extends from the bottom of the buffer package to the top of the buffer package.

According to one embodiment of the present invention, the weft rib groove further comprises at least two weft rib walls, wherein the at least two weft rib walls integrally extend from the buffer package and form a groove body of the weft rib groove between the at least two warp rib walls.

According to one embodiment of the present invention, the longitudinal rib groove further includes at least two longitudinal rib walls, and the rib groove body structure of the longitudinal rib groove is formed between the at least two longitudinal rib walls, the at least two longitudinal rib walls of the longitudinal rib groove are longitudinally disposed along the buffer package.

According to one embodiment of the present invention, the weft rib groove and longitudinal rib groove of the buffer are in a linear, curved, or wavy structure.

According to one embodiment of the present invention, the outer side diameter of the bottom of the buffer package is H1, and the spacing between the bottoms of adjacent buffer packages is H2, wherein H1 and H2 satisfy the following condition: 0 ≤ H1 ≤ H2.

According to one embodiment of the present invention, the buffer package further includes a first buffer package and a second buffer package, wherein the bottom diameter of the first buffer package is larger than that of the second buffer package.

According to one embodiment of the present invention, the outer diameter of the bottom of the buffer package on the outer side is H1, and the spacing between the bottoms of adjacent buffer packages is H2, where H1 and H2 satisfy the following condition: H1 ≤ H2.

According to one embodiment of the present invention, the base layer has a front and a back, and the buffer is formed on the front or back of the base layer.

According to one embodiment of the present invention, the base layer has a front and a back, and the buffer package comprises a front buffer package and a back buffer package, wherein the front buffer package is formed on the front of the base layer, and the back buffer package is formed on the back of the base layer.

According to one embodiment of the present invention, the front buffer package integrally extends from the back buffer package.

According to another aspect of the present invention, the present invention further provides a packaging paper comprising:
an inner layer and an outer layer; and
at least one paper packaging buffer layer as in any above, wherein the at least one packaging buffer layer is set between the inner layer and the outer layer.

According to one embodiment of the present invention, the packaging buffer layer further comprises a first buffer layer and a second buffer layer, wherein the first buffer layer and the second buffer layer are oppositely arranged, and the buffer packet of the first buffer layer is set within the interval space of the second buffer layer, and the buffer packet of the second buffer layer is set within the interval space of the first buffer layer.

According to one embodiment of the present invention, the packaging buffer layer further comprises an inner buffer layer and an outer buffer layer, wherein the size of the buffer package of the inner buffer layer is smaller than the size of the buffer package of the outer buffer layer, and the buffer package of the inner buffer layer is sleeved inside the outer buffer layer.

According to one embodiment of the present invention, the inner buffer layer and the inner layer form an inner air chamber, the inner buffer layer and the outer buffer layer form an outer air chamber, and the inner and outer air chambers of the packaging buffer layer form a dual air chamber buffer structure.

To solve the above technical problems, the deformable buffer monomer structure provided by the present invention includes: a deformation part and a connecting part;

The deformation part is formed into a spherical crown, and multiple strengthening parts are formed on the outer curved surface of the spherical crown, which can undergo deformation under force;

The connecting part is formed around the deformation part, and the self deformation part of the connecting part extends outward;

Among them, the deformation part and the connecting part are made of biodegradable and environmentally friendly materials.

Optionally, further improve the deformable buffer monomer structure to form at least two reinforcing parts.

Optionally, further improve the deformable buffer monomer structure, with four reinforcing parts.

Optionally, further improve the deformable buffer monomer structure, with nine reinforcing parts.

Optionally, further improving the deformable buffer monomer structure, including:
A bonding part is formed on the bottom surface of the connecting part, which is used to bond and fix the deformable buffer monomer structure to the external structure. The bonding part can be a non-drying adhesive coating.

Optionally, further improve the deformable buffer monomer structure, with the adhesive part covering all the bottom surfaces of the connecting parts.

In order to solve the above technical problems, the present invention provides a wrapping paper having any one of the above deformable buffer monomer structures, which is formed by connecting a plurality of connecting parts of the deformable buffer monomer structures to each other.

The adhesive part of that deformable buff monomer structure for the PAC paper can cover the bottom surface of the connecting part; The adhesive part can also be set as an adhesive point, one adhesive point can be set for each deformable buffer single structure, and the adhesive point can also be shared by a plurality of deformable buffer single structures, and in principle, the wrapping paper can be adhered and fixed on the external structure to be protected.

Optionally, the deformable buffer monomer structures are further improved, and the deformable buffer monomer structures are different in size, spacing and/or color.

Deformable buffer monomer structures with different sizes can provide different buffer strengths, and large-size deformable buffer monomer structures can be arranged at positions needing larger buffer according to actual requirements, and small-size deformable buffer monomer structures can be arranged at other positions.

In addition, the deformable buffer monomer structures with different sizes can be used for forming different patterns, for example, when the deformable buffer monomer structures with different sizes of the wrapping paper are bonded and protected outside the product, LOGO patterns and the like are formed for displaying selected contents.

In order to solve the above technical problems, the present invention provides a packaging paper bag with any one of the above deformable buffer monomer structures, wherein the bag body is any one of the existing packaging paper bags, and at least one deformable buffer monomer structure is adhered to the inner wall of the bag.

Further objects and advantages of the present invention will become more fully apparent from an understanding of the following description and accompanying drawings.

These and other objects, features, and advantages of the present invention will become more fully apparent from the following detailed description and accompanying drawings.

The invention can at least realize the following technical effects:
1. It is made of degradable materials, which can avoid environmental pollution and meet environmental protection requirements.
2, that invention can be quickly fix on the protected product through the adhesive part, and the applicability is improved.
And 3, a deformable buffer monomer structure is used for buffering, so that the difficulty of the production process is reduced and the production efficiency is improved compared with a bubble structure in the prior art.
And 4, the size, the number and the spacing of the deformable buffer monomer structures can be selected according to actual requirements to adjust the limit pressure which can be borne by the bubble paper, different structures are formed according to different pressure requirements, and the applicability of the bubble paper is further improved.
5. The packaging paper can form different patterns by setting the size, quantity, spacing and color of the deformable buffer monomer structure, so as to form advertisements, LOGO and other propaganda contents and improve the economic benefits of the packaging paper.

### Brief Description of the Drawings

The accompany drawings are intend to complement that description in the specification by illustrating the general nature of methods, structures, and/or material used in accordance with specific exemplary embodiments of the invention. The accompany drawings of that present invention, however, are not to scale and, as such, may not accurately reflect the precise structural or performance characteristic of any given embodiment and should not be construed to define or limit the scope of values or properties encompass by exemplary embodiments in accordance with the present invention. The present invention will be described in further detail below with reference to the accompanying drawings and specific embodiments:
Figure 1 shows a schematic diagram of a paper buffer packaging layer according to the first preferred embodiment of the present invention.
Figures 2A and 2B are schematic diagrams of the structure of the buffer package of the buffer layer of the present invention's first preferred embodiment.
Figures 3A and 3B are cross-sectional diagrams of the buffer package of the buffer layer of the packaging of the first preferred embodiment of the present invention.
Figures 4A to 4E are sectional views of the buffer packaging layer according to the first preferred embodiment of the present invention.
Fig. 5 is a schematic diagram of the structure of packaging paper according to the second embodiment of the present invention.
FIG. 6 is a schematic diagram of the structure of another optional embodiment of the packaging paper according to the second embodiment of the present invention.
Figure 7 is a schematic diagram of the structure of another optional embodiment of the packaging paper according to the second embodiment of the present invention.
Figure 8 is a schematic diagram of the manufacturing method of the buffer packaging layer according to the preferred embodiment of the present invention.
Figure 9 is a schematic diagram of the structure of the third embodiment of the present invention.
Figure 10 is a schematic diagram showing the structure of the second embodiment of the present invention.
Figure 11 is a schematic diagram of the structure of the fourth embodiment of the present invention.
Figure 12 is the structural schematic diagram two of the fourth embodiment of the present invention.
Figure 13 is a schematic diagram of the structure of the sixth embodiment of the present invention.

The drawings are marked as follows:
Deformation part 1, reinforcement part 1.1, connection part 2.

### Detailed Description of Embodiments

The following description is disclosed to enable any person skilled in the art to make and use the present invention. Preferred embodiments are provided in the following description only as examples and modifications will be apparent to those skilled in the art.

The skilled technicians in the art should understand that, in the disclosure of this present invention the technical terms, "longitudinal", "lateral", "upper", "lower", "front", "rear", "left", "right", the orientation or positional relationship indicated by "vertical", "horizontal", "top", "bottom", "inner", "outer", etc. are based on the orientation or positional relationship shown in the drawings, this is only for the convenience and simplifying the description for the present invention, it does not indicate or imply that the pointed device or element must have a specific orientation, be constructed and operated in a specific orientation, so the above terms should not be understood as a limitation of the present invention.

It can be explained that the term "a" should understood as "at least one" or "one or more", that is, in one embodiment, the number of an element can be one, and in another embodiment, the number of the element can be multiple, and the term "one" cannot be understood as a limitation on the number.

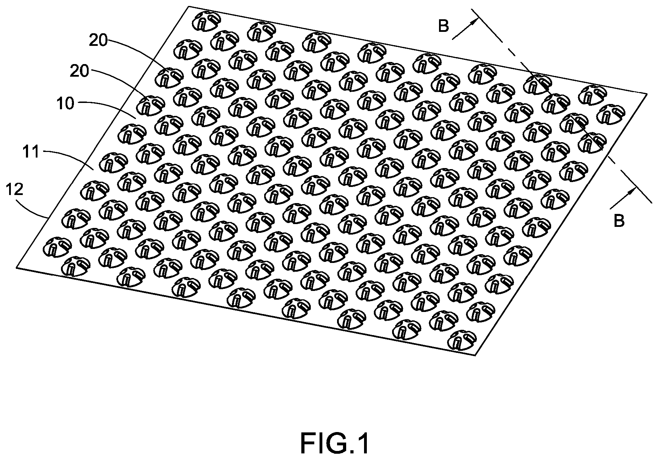

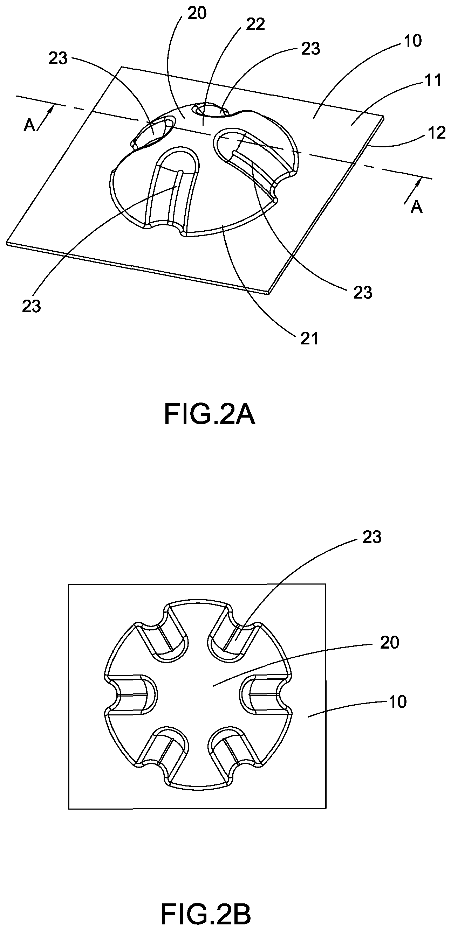

Referring to Figures 1 to 4E as shown in the accompanying drawings of this application, a paper buffer packaging layer in the first preferred embodiment of this application is described in the following. In this application, for ease of description, the paper buffer packaging layer mentioned below will be referred to as the buffer packaging layer.

The buffer packaging layer includes a base layer 10 and A plurality of buffer packages 20 formed on the base layer 10. The buffer packages 20 are integrated with the base layer 10 and formed on one side of the base layer 10. In this preferred embodiment of the application, the base layer 10 has a front surface 11 and a back surface 12, where the buffer packages 20 protrude from the front surface 11 and/or the back surface 12 of the base layer 10. It can be understood that due to the buffer packages 20 protruding from the base layer 10, when the buffer packaging layer is subjected to lateral force, the buffer packages 20 will deform under force to provide cushioning effect.

It is worth mentioning that in this preferred embodiment of the present application, the buffer packaging layer is made of paper material. The buffer packages 20 of the buffer packaging layer is integrally formed on one side of the base layer 10's buffer structure through stamping, extrusion, or rolling. Preferably, in this preferred embodiment of the present application, the buffer packages 20 of the buffer packaging layer has a hemispherical bubble-like structure, and provides a cushioning effect supported by the base layer 10.

In this preferred embodiment of the present application, the buffer layer is further provided with a plurality of air chambers 201, wherein the air chambers 201 are formed on the inner side of the buffer package 20, and are filled with gas or other cushioning materials, such as sponge, or filled with gas. The air chambers 201 of the buffer packaging layer can support the buffer package 20 of the buffer packaging layer, which is advantageous for improving the cushioning and supporting effect of the buffer packaging layer.

As shown in Figs. 1 to 4E, the base layer 10 of the buffer packaging layer is a paper-based structure, where the base layer 10 can be made of a paperboard with certain hardness or a paper with certain flexibility. The buffer packages 20 protrudes from the upper and/or lower side of the base layer 10, with its bottom end connected to the base layer 10, and its top end protruding from the front 11 and/or back 12 of the base layer 10.

The buffer package 20 of the buffer packaging layer includes a bottom 21 and a top 22 that extends outward from the bottom 21, wherein the bottom 21 of the buffer package 20 is connected to the base 10 and provides support for the buffer package 20 through the base 10; the top 22 of the buffer package 20 is located on the outer side of the bottom 21, and when the buffer packaging layer is subjected to force, the top 22 of the buffer package 20 undergoes deformation under the action of force to provide support and buffering. It can be understood that the buffer package 20 protrudes from the base layer 10. Therefore, when the buffer packaging layer receives external force, the top 22 of the buffer packages 20 will be first affected by the force and deform.

Preferably, in this preferred embodiment of the present application, the buffer packages 20 is hemispherical. In another optional embodiment of the present application, the buffer packages 20 has a cylindrical structure or a heart-shaped protrusion. Therefore, the shape of the buffer packages 20 in the present application is only exemplary, not limiting. The bottom 21 of the buffer packages 20 extends integrally upwards or downwards from the base layer 10 to the top 22 of the buffer packages 20. Preferably, in a better embodiment of the present application, the bottom 21 of the buffer packages 20 extends vertically upwards or downwards from the base layer 10. When the top 22 of the buffer packages 20 is subjected to force, the bottom 21 of the buffer packages 20 transmits the force along the direction perpendicular to the base layer 10, which is beneficial to improve the supporting effect of the buffer packages 20.

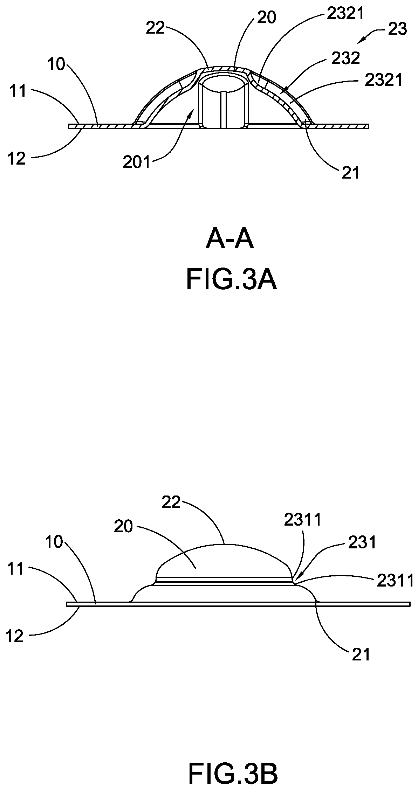

As shown in Figures 3A and 3B, the buffer package layer further includes a buffer packages 20, which is provided with at least one rib groove 23, wherein the at least one rib groove 23 is formed on the surface of the buffer packages 20 and increases the strength of the buffer packages 20 through the rib groove 23, so that the buffer packages 20 has a supporting effect when subjected to force, thereby improving the buffer effect of the buffer package layer.

As shown in Figures 3A and 3B, the buffer packages 20 of the buffer package layer further includes at least one rib groove 23, wherein the at least one rib groove 23 is formed on the surface of the buffer packages 20 and increases the strength of the buffer packages 20 through the rib groove 23, so that the buffer packages 20 has a supporting effect when subjected to force, thereby improving the buffer effect of the buffer package layer.

The rib groove 23 is formed on the outer surface of the buffer packages 20 and is recessed inward from the outer surface of the buffer packages 20. In other words, the rib groove 23 is a rib groove structure formed on the buffer packages 20. The rib groove 23 is a rib groove structure formed on the outer surface of the buffer packages 20.

As shown in figures 3A and 3B, in the preferred embodiment of the present application, the rib groove 23 further includes a weft rib groove 231, wherein the weft rib groove 231 has a ring-shaped structure formed in the buffer packages 20. The plane where the weft rib groove 231 is located is roughly parallel to the base layer 10. When the top 22 of the buffer packages 20 is under stress, the weft rib groove 231 of the rib groove 23 will deform due to the force to provide a buffering effect. The rib groove 23 further includes a longitudinal rib groove 232, wherein the longitudinal rib groove 232 has a semi-ring shaped structure formed in the buffer packages 20. The plane where the longitudinal rib groove 232 is located is roughly perpendicular to the base layer 10. When the top 22 of the buffer packages 20 is under stress, the longitudinal rib groove 232 of the rib groove 23 provides support.

Understandably, in this preferred embodiment of the present application, the number of rib grooves 23 can be odd or even. Preferably, in this preferred embodiment of the present application, the number of longitudinal rib grooves 232 in the rib grooves 23 can be 3, 5, 7, etc., and the spacing between each of the longitudinal rib grooves 232 is equal. When the number of longitudinal rib grooves 232 in the rib grooves 23 is 2, 4, or 6, the longitudinal rib grooves 232 are formed symmetrically on the outer surface of the buffer packages 20.

Specifically, the longitudinal rib groove 232 extends from the bottom 21 of the buffer packages 20 to the top 22 of the buffer packages 20. Alternatively, in another optional embodiment of the present application, the length of the longitudinal rib groove 232 is one-third or two-thirds of the length from the bottom 21 to the top 22 of the buffer packages 20.

The weft rib groove 231 further comprises at least two weft rib walls 2311, wherein the at least two weft rib walls 2311 are integrally extended from the buffer packages 20, and form the rib groove body of the weft rib groove 231 between the at least two weft rib walls 2311. It is worth mentioning that in this preferred embodiment of the present application, the weft rib walls 2311 of the weft rib groove 231 overlap with each other, and when the buffer packages 20 is subjected to force, the adjacent two weft rib walls 2311 of the weft rib groove 231 separate under the action of force, thereby providing a buffering effect of force.

The longitudinal rib groove 232 further comprises at least two longitudinal rib walls 2321, and a rib groove structure of the longitudinal rib groove 232 is formed between the at least two longitudinal rib walls 2321. The at least two longitudinal rib walls 2321 of the longitudinal rib groove 232 are longitudinally located along the buffer packages 20, and when the top of the buffer packages 20 is under stress, the at least two longitudinal rib walls 2321 of the longitudinal rib groove 232 provide supportive force to enhance the supporting function of the buffer.

It can be understood that in the preferred embodiment of the present application, the at least two weft rib walls 2311 of the weft rib groove 231 and the at least two longitudinal rib walls 2321 of the longitudinal rib groove 232 extend inward from the outer surface of the buffer packages 20, forming an outward-in structure that helps to improve the structural characteristics of the buffer.

It should be noted that in this preferred embodiment of the present application, the weft rib groove 231 and the longitudinal rib groove 232 of the buffer packages 20 are in a linear, curved or wave-like structure, and the shape of the weft rib groove 231 and the longitudinal rib groove 232 are only exemplary, rather than limiting.

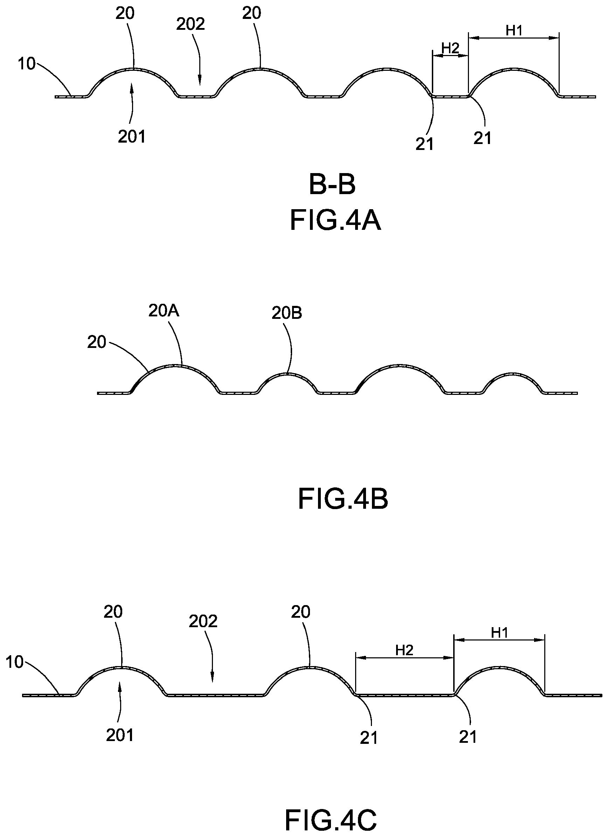

As shown in Figures 4A to 4E, the structure of the buffer packaging layer is further explained in another aspect of this application, wherein the buffer package 20 of the buffer packaging layer is uniformly formed on the base layer 10. As shown in Figure 4A, in this preferred embodiment of the present application, the sizes of the respective buffer packages 20 of the buffer packaging layer are uniform, and the buffer packaging layer further has a gap space 202, which is formed on one side of the base layer 10 and located on the outer side of each of the buffer packages 20. It will be appreciated that the gap space 202 of the buffer packaging layer is formed on the same side of the buffer package 20 and can be filled with buffer material, facilitating a better buffering effect. It will be appreciated that when the buffer packaging layer is sealed, gas can be filled in the gap space 202 and the air chamber 201 of the buffer package 20 to form mutually spaced gas storage chambers. When the buffer packaging layer is subjected to force, the gap space 202 and the air chamber 201 inside the buffer package 20 are subjected to compressive force, providing a reverse force that is beneficial to provide gas buffering effect.

As shown in Figure 4A, the outer diameter of the bottom 21 of the buffer packages 20 on the outer side is H1, and the distance between the bottoms 21 of adjacent buffers 20 is H2, where H1 and H2 satisfy the following condition: 0≥H1≥H2. This means that A plurality of buffers 20 are arranged on one side of the base layer 10 at intervals to improve the buffering effect of the buffer layer, and to provide good support and pressure-bearing effect for the buffers 20 that are spaced apart.

As shown in Figure 4B, in the preferred embodiment of the present application, the buffer packages 20 of the buffer packaging layer have different sizes (diameters). Specifically, in the preferred embodiment of the present application, the buffer package 20 further includes a first buffer layer 20A and a second buffer layer 20B, wherein the bottom diameter of the first buffer layer 20A is greater than that of the second buffer layer 20B. Therefore, when the two layers of buffer packaging layers are stacked up and down, the first buffer layer 20A can be placed on top of the second buffer layer 20B, and the second buffer layer 20B is placed inside the first buffer layer 20A. By providing double buffer protection through the first buffer layer 20A and the second buffer layer 20B of the buffer package 20, the buffering and supporting effect can be improved.

As shown in Fig. 4C, in the preferred embodiment of this application, different from the first preferred embodiment above, the outer diameter of the bottom 21 of the buffer packages 20 in the buffer package 20 is H1 and the distance between the bottom 21 of adjacent buffer packages 20 is H2, where H1 and H2 satisfy the following condition: H1 ≤ H2. It can be understood that when two buffer pack layers are relatively arranged, a buffer package 20 of one buffer pack layer can be positioned in alignment within the gap space 201 of another buffer pack layer, so that the two buffer pack layers can be aligned with each other. It can be understood that two aligned buffer pack layers can provide buffering and support in two directions (from the front and back of the base layer 10).

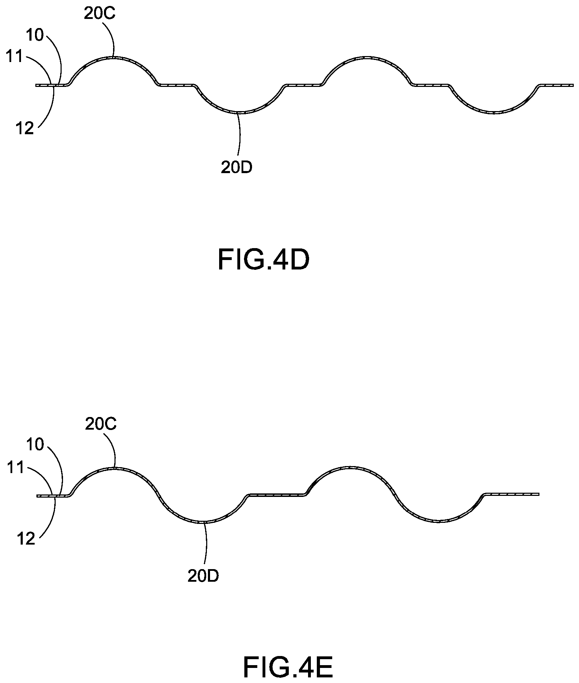

As shown in Figure 4A to Figure 4C, the buffer packages 20 is formed on one side of the base layer 10, i.e., the buffer packages 20 is formed on the front or back of the base layer 10. As shown in Figure 4D, the buffer packages 20 is formed on both the front and back of the base layer 10. Accordingly, the buffer packages 20 further comprises a front buffer package 20C and a back buffer package 20D, wherein the front buffer package 20C is formed on the front 11 of the base layer 10, i.e., the front buffer package 20C protrudes and extends upward from the front of the base layer 10; and the back buffer package 20D is formed on the back 12 of the base layer 10, i.e., the back buffer package 20D protrudes and extends downward from the back of the base layer 10.

It can be understood that the front buffer package 20C located on the front of the base layer 10 can provide buffering and support functions from the base layer 10; and the back buffer package 20D located on the back of the base layer 10 can provide buffering and support functions from the base layer 10.

It should be noted that, in the preferred embodiment of the present application, the front buffer package 20C and the back buffer package 20D of the buffer packages 20 are spaced apart from each other, and the front buffer package 20C and the back buffer package 20D extend integrally from the base layer 10.

As shown in Figure 4E, the difference from the buffer packaging layer of the above-mentioned preferred embodiment is that the front buffer package 20C of the buffer layer 20 extends integrally from the back buffer package 20D of the buffer layer 20, that is, the front buffer package 20C and the back buffer package 20D are integrally structured.

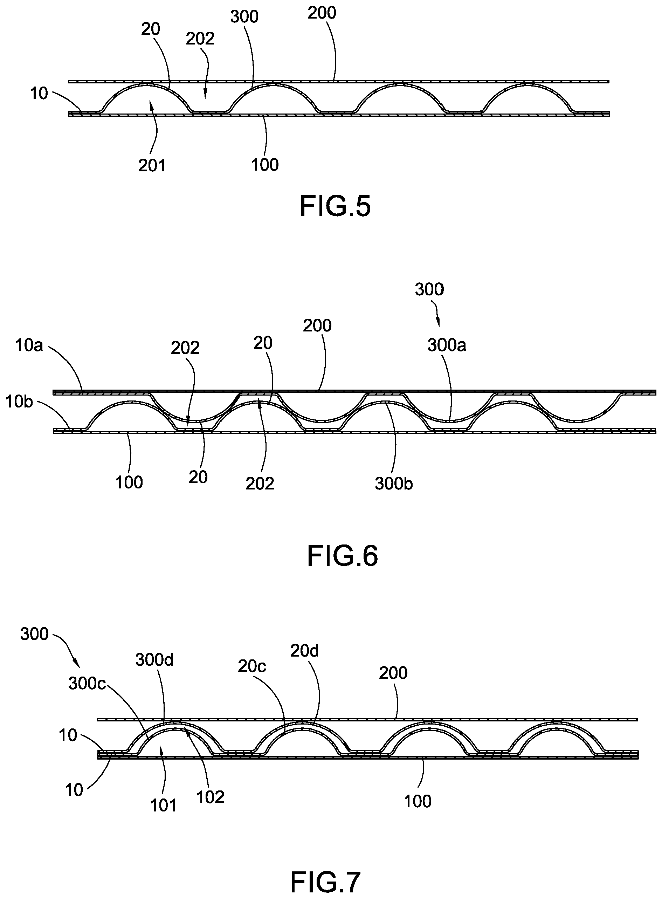

As shown in Figures 5 to 8, a packaging paper according to another preferred embodiment of the present application is described below. The packaging paper includes an inner layer 100, an outer layer 200, and at least one packaging buffer layer 300 set between the inner layer 100 and the outer side 200. The structure of the packaging buffer layer 300 is the same as that in any of the preferred embodiments mentioned above and will not be repeated here.

The packaging buffer layer 300 is located between the inner layer 100 and the outer layer 200, wherein the packaging buffer layer 300 is adhered to the inner side of the inner layer 100 and the outer layer 200 by adhesive means. The top of the buffer package 20 of the packaging buffer layer 300 is adhered to the inner side of the inner layer 100 or the inner side of the outer layer 200, and the spacing space 202 of the packaging buffer layer 300 is sealed by the inner layer 100 or the outer layer 200, thereby forming a sealed gas storage structure. Correspondingly, the base layer 10 of the packaging buffer layer 300 is adhered to the inner layer 100 or the outer layer 200 for sealing, thereby forming a sealed gas storage structure.

It can be understood that when the packaging buffer layer 300 of the packaging paper is multi-layered, a plurality of buffer structure is formed by the packaging buffer layer 300. As shown in Figure 6, in this preferred embodiment of the present application, the packaging buffer layer 300 of the packaging paper further comprises a first buffer layer 300a and a second buffer layer 300b. The first buffer layer 300a and the second buffer layer 300b have the same structure, and the first buffer layer 300a and the second buffer layer 300b are relatively positioned. The buffer packages 20 of the first buffer layer 300a corresponds to the gap space 202 of the second buffer layer 300b, and the buffer packages 20 of the first buffer layer 300a is set inside the gap space 202 of the second buffer layer 300b. The buffer packages 20 of the second buffer layer 300b corresponds to the gap space 202 of the first buffer layer 300a, and the buffer packages 20 of the second buffer layer 300b is set inside the gap space 202 of the first buffer layer 300a.

The base layer 10a of the first buffer layer 300a and the base layer 10b of the second buffer layer 300b of the packaging buffer layer 300 are adhered between the inner layer 100 and the outer layer 200. It should be understood that in this preferred embodiment of the present application, the double-layer structure of the packaging buffer layer 300 provides a buffering effect from the inner layer 100 and the outer layer 200.

As shown in Figure 7, in the preferred embodiment of the present application, the packaging buffer layer 300 further comprises an inner buffer layer 300c and an outer buffer layer 300d. The size of the buffer package 20c in the inner buffer layer 300c is smaller than the size of the buffer package 20d in the outer buffer layer 300d. Therefore, when the inner buffer layer 300c and the outer buffer layer 300d are aligning, the buffer package 20c of the inner buffer layer 300c is nested inside the buffer package 20d of the outer buffer layer 300d.

In the preferred embodiment of the present application, the inner layer 100 is positioned on one side of the inner buffer layer 300c of the packaging buffer layer 300, while the outer layer 200 is positioned on one side of the outer buffer layer 300d, wherein the inner buffer layer 300c and the outer buffer layer 300d of the packaging buffer layer 300 are stacked on top of each other.

In the preferred embodiment of the present application, the inner buffer layer 300c and the outer buffer layer 300d of the packaging buffer layer 300 are adhesively bonded to form a double-layer buffer structure, wherein the inner layer 100 is adhesively bonded to the base layer 10 of the inner buffer layer 300c, and the outer side 200 is adhesively bonded to the top of the outer buffer layer 300d. Thus, the packaging buffer layer 300 forms a double air chamber structure, namely an inner air chamber 101 formed by the inner buffer layer 300c and the inner layer 100, and an outer air chamber 102 formed by the inner buffer layer 300c and the outer buffer layer 300d, forming a dual air chamber buffer structure of the packaging buffer layer 300.

Understandably, in this preferred embodiment of the present application, the inner air chamber 101 of the packaging buffer layer 300 is a sealed air chamber structure formed by the inner layer 100 and the inner buffer layer 300c. The outer air chamber 102 is a sealed structure formed by the inner buffer layer 300c and the outer buffer layer 300d.

It can be understood that when the side of the packaging paper is subjected to force, the inner buffer layer 300c, outer buffer layer 300d and the multilayer support structure formed by the inner air chamber 101 and outer air chamber 102 formed in the packaging piercing layer 300 of the packaging buffer layer 300 provide a dual support and cushioning structure for the packaging paper.

Preferably, in this preferred embodiment of the present application, the packaging paper is a paper structure, wherein the inner layer 100 is non-bubble paper such as kraft paper, which helps reduce friction and keep the internal structure flat. The outer layer 200 is a paper structure, such as kraft paper.

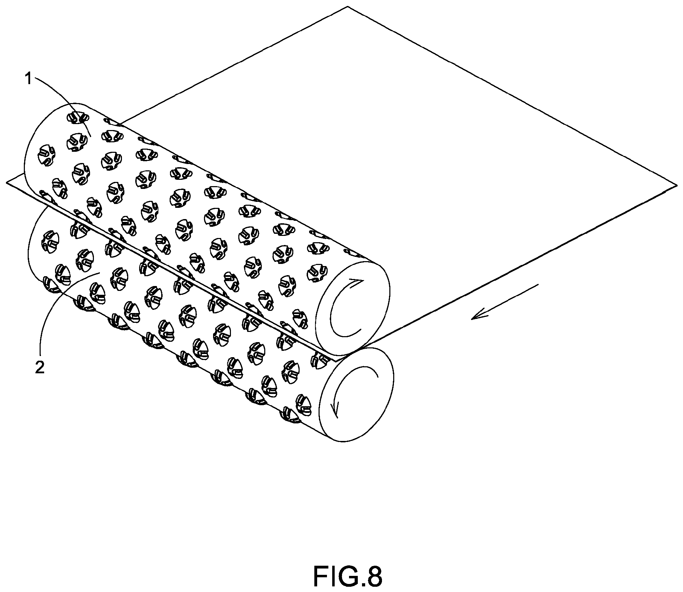

Referring to Figure 8 of the attached drawings in this application specification, and according to another aspect of this application, a method for producing a packaging buffer layer is provided. As the packaging buffer layer is a paper-based structure, the buffer structure is formed on the surface of the paper by roll pressing or extrusion during the production process.

Rolling wheel 1 and rolling wheel 2 are the molds required to process the packaging buffer layer. Rolling wheel 1 and rolling wheel 2 form the buffer pack on the paper to be processed by rolling. Rolling wheel 1 and/or rolling wheel 2 have A plurality of raised structures, wherein the raised structures correspond to the buffer pack structure of the packaging buffer layer.

It should be noted that the processing method of the packaging buffer layer mentioned here is only exemplary and not limiting.

### Third Embodiment;

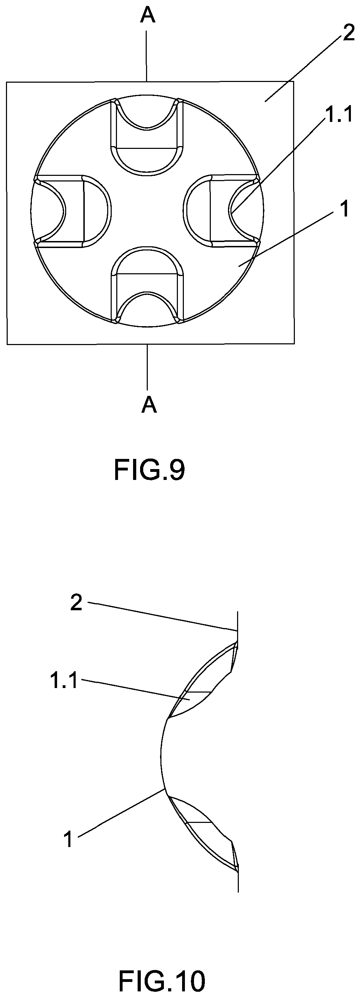

As shown in Figure 9 combined with Figure 10, the present invention provides a deformable buffer monomer structure, comprising: a deformation part 1 and a connecting part 2.

Deformation part 1, which is formed as a spherical cap. A plurality of reinforcement parts 1.1 are formed on the outer curved surface of the spherical cap, which can undergo deformation when subjected to force.

Connection part 2, which is formed around the deformation part 1, extends outwardly from the deformation part.

Wherein, the deformation part 1 and the connecting part 2 are made of degradable and environmentally friendly materials.

Optionally, the reinforcement part 1.1 in this embodiment comprises four uniformly formed concave parts on the spherical cap. These concave parts will cause creases on the spherical cap wall, and the strength of the wall at the creases will necessarily be greater than at other locations on the spherical cap.

Similarly, the reinforcement part 1.1 can be selected as reinforcing ribs formed on the ball head, for example, thickening the wall thickness of the ball head at the specified location (reinforcement rib location).

### Fourth embodiment;

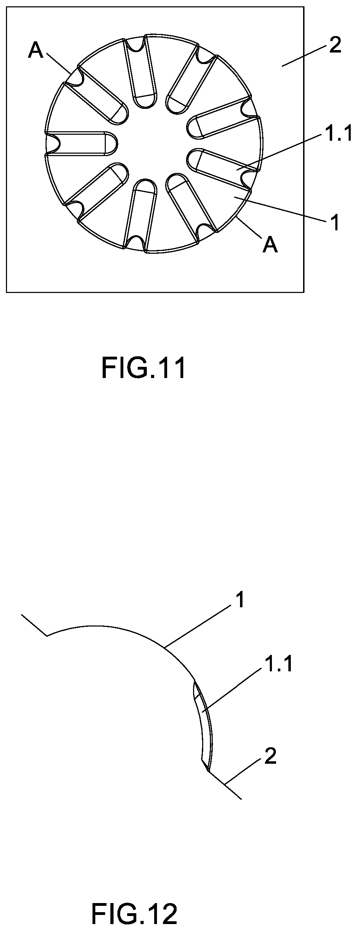

As shown in Figure 11 in conjunction with Figure 12, the present invention provides a deformable buffer monomer structure, comprising: a deformation part 1 and a connecting part 2.

Deformation part 1, which is formed as a spherical cap, wherein A plurality of reinforcement parts 1.1 are formed on the outer curved surface of the spherical cap, which can withstand the force and undergo deformation.

Connection part 2, which is formed around the deformation part 1, with the connection part extending outward from the deformation part.

Wherein, the deformation part 1 and connecting part 2 are made of degradable environmental-friendly materials.

Optional, in this embodiment, the reinforcement part 1.1 is made up of 9 uniformly formed depressions pressed down on the spherical cap. These depressions will cause the wall of the spherical cap to form creases, and the strength of the spherical cap wall at the creases will inevitably be greater than the strength at other positions of the spherical cap.

Correspondingly, the reinforcement part 1.1 can be selected to be formed on the spherical cap as reinforcement ribs, for example, thickening the wall thickness of the spherical cap at a specified location (reinforcement rib location).

### Fifth embodiment;

The fifth embodiment of the present invention is a further improvement based on the third and fourth embodiments described above. The same parts will not be described again. It also includes:
a bonding section is formed on the bottom surface of the connecting section, and it is used to bond and fix the deformable buffer monomer structure to the external structure.

Optional, wherein the adhesive portion covers the entire bottom surface of the connecting portion.

Alternatively, the adhesive portion is formed as an adhesive dot and is set on the bottom surface of the connecting portion. The adhesive portion can be coated with pressure-sensitive adhesive.

### Sixth embodiment;

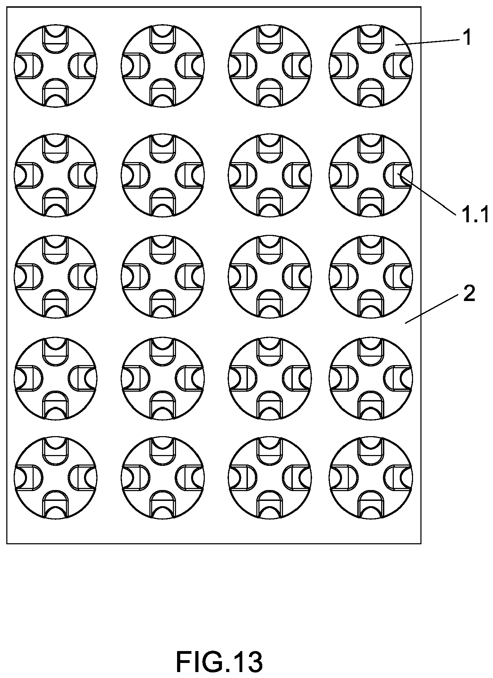

Referring to Figure 13, the present invention provides a packaging paper comprising a deformable cushioning unit structure as described in any one of the third to fifth embodiments, which is formed by connecting A plurality of connecting portions of said deformable cushioning unit structure to each other.

Optionally, to further improve the sixth embodiment mentioned above, the size, spacing, and/or color of each deformable buffer unit structure may be different.

### Seventh Embodiment;

The present invention provides a packaging paper bag with a deformable buffering unit structure as described in any of the third to fifth embodiments, wherein the bag body is any existing packaging paper bag, and its inner wall is bonded with at least one of the deformable buffering unit structures.

## Claims

1. A paper packaging buffer layer (1), comprising:
a base layer (10); and
a plurality of buffer packages (20) and a plurality of air chambers (30) formed in the buffer packages (20), wherein the plurality of buffer packages (20) are formed on the base layer (10), the air chambers (30) are formed on the inner side of the buffer packages (20), the buffer package (20) includes a bottom portion (21) and a top portion (22) integrally extending outward from the bottom portion (21), the bottom portion (21) of the buffer package (20) integrally extending upward from the base layer (10) to the top portion (22) of the buffer package (20), **characterized in that** the buffer package (20) is further provided with at least one rib groove (23), and the at least one rib groove (23) is formed on the surface of the buffer package (20).

2. The paper packaging buffer layer (1), as claimed in claim 1, wherein the rib groove (23) is formed on the outer surface of the cushion pack (20) and recessed inward from the outer surface of the cushion pack (20).

3. The paper packaging buffer layer (1), as claimed in claim 2, wherein the rib groove (23) further comprises a weft rib groove (231), wherein the weft rib groove (231) is formed in the buffer package (20) in an annular structure, and the plane of the weft rib groove (231) is parallel to the base layer (10).

4. The paper packaging buffer layer (1), as claimed in claim 2 or 3, wherein the rib groove (23) further comprises a longitudinal rib groove (232) formed in the buffer package (20) in a semi-annular structure, wherein a plane of the longitudinal rib groove (232) is substantially perpendicular to the substrate (10).

5. The paper packaging buffer layer (1), as claimed in claim 4, wherein the spacing distance between each longitudinal rib groove (232) is equal.

6. The paper packaging buffer layer (1), as claimed in claim 4, wherein the longitudinal rib groove (232) extends from the bottom (21) of the buffer package (20) to the top (22) of the buffer package (20).

7. The paper packaging buffer layer (1), as claimed in claim 4, wherein the weft rib groove (231) further comprises at least two weft rib walls (2311), wherein the at least two weft rib walls (2311) integrally extend from the buffer package (20) and form a groove body of the weft rib groove (231) between the at least two warp rib walls (2311).

8. The paper packaging buffer layer (1), as claimed in claim 4, wherein the longitudinal rib groove (232) further includes at least two longitudinal rib walls (2321), and the rib groove body structure of the longitudinal rib groove (232) is formed between the at least two longitudinal rib walls (2321), the at least two longitudinal rib walls (2321) of the longitudinal rib groove (232) are longitudinally disposed along the buffer package (20).

9. The paper packaging buffer layer (1), as claimed in claim 7 or 8, wherein the buffer package (20) further includes a first buffer package (20A) and a second buffer package (20B), wherein the bottom diameter of the first buffer package (20A) is larger than that of the second buffer package (20B).

10. The paper packaging buffer layer (1), as claimed in claim 7 or 8, wherein the outer diameter of the bottom of the buffer package (20) on the outer side is H1, and the spacing between the bottoms of adjacent buffer packages (20) is H2, where H1 and H2 satisfy the following condition: H1 ≤ H2.

11. The paper packaging buffer layer (1), as claimed in claim 7 or 8, wherein the base layer (10) has a front (11) and a back (12), and the buffer package (20) comprises a front buffer package (20C) and a back buffer package (20D), wherein the front buffer package (20C) is formed on the front (11) of the base layer (10), and the back buffer package (20D) is formed on the back (12) of the base layer (10).

12. A packaging paper (300), comprising:
an inner layer (100) and an outer layer (200); and
at least one paper packaging buffer layer (300) wherein the at least one packaging buffer layer (300) is set between the inner layer (100) and the outer layer (200) ^{,} the paper packaging buffer layer (300) comprise a base layer (10) and a plurality of buffer packages (20) and a plurality of air chambers (30) formed in the buffer packages (20), wherein the plurality of buffer packages (20) are formed on the base layer (10), the air chambers (30) are formed on the inner side of the buffer packages (20), the buffer package (20) includes a bottom portion (21) and a top portion (22) integrally extending outward from the bottom portion (21), the bottom portion (21) of the buffer package (20) integrally extending upward from the base layer (10) to the top portion (22) of the buffer package (20), **characterized in that** the buffer package (20) is further provided with at least one rib groove (23), and the at least one rib groove (23) is formed on the surface of the buffer package (20).

13. The packaging paper (300), as claimed in claim 12 wherein the packaging buffer layer (300) further comprises a first buffer layer (300a) and a second buffer layer (300b), wherein the first buffer layer (300a) and the second buffer layer (300b) are oppositely arranged, and the buffer packet of the first buffer layer (300a) is set within the interval space of the second buffer layer (300b), and the buffer packet of the second buffer layer (300b) is set within the interval space of the first buffer layer (300a).

14. The packaging paper (300), as claimed in claim 13 wherein the packaging buffer layer (300) further comprises an inner buffer layer (300c) and an outer buffer layer (300d), wherein the size of the buffer package of the inner buffer layer (300c) is smaller than the size of the buffer package of the outer buffer layer (300d), and the buffer package of the inner buffer layer (300c) is sleeved inside the outer buffer layer (300d).

15. The packaging paper (300), as claimed in claim 14, wherein the inner buffer layer (300c) and the inner layer (100) form an inner air chamber, the inner buffer layer (300c) and the outer buffer layer (300d) form an outer air chamber, and the inner and outer air chambers of the packaging buffer layer (300) form a dual air chamber buffer structure.

## Patentansprüche

1. Papierverpackungs-Pufferschicht (1), umfassend:
eine Basisschicht (10); und
eine Vielzahl von Pufferpackungen (20) und eine Vielzahl von Luftkammern (30), die in den Pufferpackungen (20) gebildet sind, wobei die Vielzahl von Pufferpackungen (20) auf der Basisschicht (10) gebildet sind, die Luftkammern (30) auf der Innenseite der Pufferpackungen (20) gebildet sind, die Pufferpackung (20) einen unteren Abschnitt (21) und einen oberen Abschnitt (22) beinhaltet, der sich vom unteren Abschnitt (21) einstückig nach außen erstreckt,
wobei sich der untere Abschnitt (21) der Pufferpackung (20) von der Basisschicht (10) einstückig nach oben zum oberen Abschnitt (22) der Pufferpackung (20) erstreckt, **dadurch gekennzeichnet, dass** die Pufferpackung (20) weiter mit mindestens einer Rippennut (23) versehen ist, und die mindestens eine Rippennut (23) an der Oberfläche der Pufferpackung (20) gebildet ist.

2. Papierverpackungs-Pufferschicht (1) nach Anspruch 1, wobei die Rippennut (23) an der Außenfläche des Polsterpacks (20) gebildet und von der Außenfläche des Polsterpacks (20) nach innen vertieft ist.

3. Papierverpackungs-Pufferschicht (1) nach Anspruch 2, wobei die Rippennut (23) weiter eine Schussrippennut (231) umfasst, wobei die Schussrippennut (231) in der Pufferpackung (20) in einer ringförmigen Struktur gebildet ist, und die Ebene der Schussrippennut (231) zur Basisschicht (10) parallel ist.

4. Papierverpackungs-Pufferschicht (1) nach Anspruch 2 oder 3, wobei die Rippennut (23) weiter eine Längsrippennut (232) umfasst, die in einer halbringförmigen Struktur in der Pufferpackung (20) gebildet ist, wobei eine Ebene der Längsrippennut (232) im Wesentlichen zum Substrat (10) senkrecht ist.

5. Papierverpackungs-Pufferschicht (1) nach Anspruch 4, wobei der Beabstandungsabstand zwischen jeder Längsrippennut (232) gleich ist.

6. Papierverpackungs-Pufferschicht (1) nach Anspruch 4, wobei sich die Längsrippennut (232) von der Unterseite (21) der Pufferpackung (20) zur Oberseite (22) der Pufferpackung (20) erstreckt.

7. Papierverpackungs-Pufferschicht (1) nach Anspruch 4, wobei die Schussrippennut (231) weiter mindestens zwei Schussrippenwände (2311) umfasst, wobei sich die mindestens zwei Schussrippenwände (2311) einstückig aus der Pufferpackung (20) erstrecken und zwischen den mindestens zwei Schussrippenwänden (2311) einen Nutkörper der Schussrippennut (231) bilden.

8. Papierverpackungs-Pufferschicht (1) nach Anspruch 4, wobei die Längsrippennut (232) weiter mindestens zwei Längsrippenwände (2321) beinhaltet, und die Rippennutkörperstruktur der Längsrippennut (232) zwischen den mindestens zwei Längsrippenwänden (2321) gebildet ist, die mindestens zwei Längsrippenwände (2321) der Längsrippennut (232) in Längsrichtung entlang der Pufferpackung (20) angeordnet sind.

9. Papierverpackungs-Pufferschicht (1) nach Anspruch 7 oder 8, wobei die Pufferpackung (20) weiter eine erste Pufferpackung (20A) und eine zweite Pufferpackung (20B) beinhaltet, wobei der untere Durchmesser der ersten Pufferpackung (20A) größer ist als der der zweiten Pufferpackung (20B).

10. Papierverpackungs-Pufferschicht (1) nach Anspruch 7 oder 8, wobei der Außendurchmesser der Unterseite der Pufferpackung (20) an der Außenseite H1 beträgt, und der Abstand zwischen den Unterseiten benachbarter Pufferpackungen (20) H2 beträgt, wobei H1 und H2 die folgende Bedingung erfüllen: H1 ≤ H2.

11. Papierverpackungs-Pufferschicht (1) nach Anspruch 7 oder 8, wobei die Basisschicht (10) eine Vorderseite (11) und eine Rückseite (12) aufweist und die Pufferpackung (20) eine vordere Pufferpackung (20C) und eine hintere Pufferpackung (20D) umfasst, wobei die vordere Pufferpackung (20C) an der Vorderseite (11) der Basisschicht (10) gebildet ist und die hintere Pufferpackung (20D) an der Rückseite (12) der Basisschicht (10) gebildet ist.

12. Verpackungspapier (300), umfassend:
eine innere Schicht (100) und eine äußere Schicht (200); und
mindestens eine Papierverpackungs-Pufferschicht (300), wobei die mindestens eine Verpackungspufferschicht (300) zwischen der inneren Schicht (100) und der äußeren Schicht (200) gesetzt ist, wobei die Papierverpackungs-Pufferschicht (300) eine Basisschicht (10) und eine Vielzahl von Pufferpackungen (20) und eine Vielzahl von Luftkammern (30) umfasst, die in den Pufferpackungen (20) gebildet sind, wobei die Vielzahl von Pufferpackungen (20) auf der Basisschicht (10) gebildet sind, die Luftkammern (30) auf der Innenseite der Pufferpackungen (20) gebildet sind, die Pufferpackung (20) einen unteren Abschnitt (21) und einen oberen Abschnitt (22) beinhaltet, der sich vom unteren Abschnitt (21) einstückig nach außen erstreckt, wobei sich der untere Abschnitt (21) der Pufferpackung (20) von der Basisschicht (10) einstückig nach oben zum oberen Abschnitt (22) der Pufferpackung (20) erstreckt, **dadurch gekennzeichnet, dass** die Pufferpackung (20) weiter mit mindestens einer Rippennut (23) versehen ist, und die mindestens eine Rippennut (23) an der Oberfläche der Pufferpackung (20) gebildet ist.

13. Verpackungspapier (300) nach Anspruch 12, wobei die Verpackungspufferschicht (300) weiter eine erste Pufferschicht (300a) und eine zweite Pufferschicht (300b) umfasst, wobei die erste Pufferschicht (300a) und die zweite Pufferschicht (300b) gegenüberliegend angeordnet sind und die Pufferpackung der ersten Pufferschicht (300a) innerhalb des Intervallraums der zweiten Pufferschicht (300b) gesetzt ist und die Pufferpackung der zweiten Pufferschicht (300b) innerhalb des Intervallraums der ersten Pufferschicht (300a) gesetzt ist.

14. Verpackungspapier (300) nach Anspruch 13, wobei die Verpackungspufferschicht (300) weiter eine innere Pufferschicht (300c) und eine äußere Pufferschicht (300d) umfasst, wobei die Größe der Pufferpackung der inneren Pufferschicht (300c) kleiner ist als die Größe der Pufferpackung der äußeren Pufferschicht (300d), und die Pufferpackung der inneren Pufferschicht (300c) innerhalb der äußeren Pufferschicht (300d) ummantelt ist.

15. Verpackungspapier (300) nach Anspruch 14, wobei die innere Pufferschicht (300c) und die innere Schicht (100) eine innere Luftkammer bilden, die innere Pufferschicht (300c) und die äußere Pufferschicht (300d) eine äußere Luftkammer bilden und die inneren und äußeren Luftkammern der Verpackungspufferschicht (300) eine Doppelluftkammer-Pufferstruktur bilden.

## Revendications

1. Couche tampon d'emballage en papier (1), comportant :
une couche de base (10) ; et
une pluralité d'emballages tampons (20) et une pluralité de chambres à air (30) formées dans les emballages tampons (20), dans laquelle la pluralité d'emballages tampons (20) sont formés sur la couche de base (10), les chambres à air (30) sont formées sur le côté intérieur des emballages tampons (20), l'emballage tampon (20) inclut une partie inférieure (21) et une partie supérieure (22) s'étendant d'un seul tenant vers l'extérieur à partir de la partie inférieure (21), la partie inférieure (21) de l'emballage tampon (20) s'étendant d'un seul tenant vers le haut depuis la couche de base (10) jusqu'à la partie supérieure (22) de l'emballage tampon (20), **caractérisée en ce que** l'emballage tampon (20) est en outre doté d'au moins une rainure de nervure (23), et l'au moins une rainure de nervure (23) est formée sur la surface de l'emballage tampon (20).

2. Couche tampon d'emballage en papier (1), selon la revendication 1, dans laquelle la rainure de nervure (23) est formée sur la surface extérieure du groupe de coussinets (20) et en retrait vers l'intérieur à partir de la surface extérieure du groupe de coussinets (20).

3. Couche tampon d'emballage en papier (1), selon la revendication 2, dans laquelle la rainure de nervure (23) comporte en outre une rainure de nervure de trame (231), dans laquelle la rainure de nervure (231) est formée dans l'emballage tampon (20) dans une structure annulaire, et le plan de la rainure de nervure de trame (231) est parallèle à la couche de base (10).

4. Couche tampon d'emballage en papier (1), selon la revendication 2 ou 3, dans laquelle la rainure de nervure (23) comporte en outre une rainure de nervure longitudinale (232) formée dans l'emballage tampon (20) dans une structure semi-annulaire, dans laquelle un plan de la rainure de nervure longitudinale (232) est sensiblement perpendiculaire au substrat (10).

5. Couche tampon d'emballage en papier (1), selon la revendication 4, dans laquelle la distance d'espacement entre chaque rainure de nervure longitudinale (232) est égale.

6. Couche tampon d'emballage en papier (1), selon la revendication 4, dans laquelle la rainure de nervure longitudinale (232) s'étend du bas (21) de l'emballage tampon (20) au haut (22) de l'emballage tampon (20).

7. Couche tampon d'emballage en papier (1), selon la revendication 4, dans laquelle la rainure de nervure de trame (231) comporte en outre au moins deux parois de nervure de trame (2311), dans laquelle les au moins deux parois de nervure de trame (2311) s'étendent d'un seul tenant à partir de l'emballage tampon (20) et forment un corps de rainure de la rainure de nervure de trame (231) entre les au moins deux parois de nervure de chaîne (2311).

8. Couche tampon d'emballage en papier (1), selon la revendication 4, dans laquelle la rainure de nervure longitudinale (232) inclut en outre au moins deux parois de nervure longitudinales (2321), et la structure de corps de rainure de nervure de la rainure de nervure longitudinale (232) est formée entre les au moins deux parois de nervure longitudinales (2321), les au moins deux parois de nervure longitudinales (2321) de la rainure de nervure longitudinale (232) sont disposées longitudinalement le long de l'emballage tampon (20).

9. Couche tampon d'emballage en papier (1), selon la revendication 7 ou 8, dans laquelle l'emballage tampon (20) inclut en outre un premier emballage tampon (20A) et un deuxième emballage tampon (20B), dans laquelle le diamètre inférieur du premier emballage tampon (20A) est plus grand que celui du deuxième emballage tampon (20B).

10. Couche tampon d'emballage en papier (1), selon la revendication 7 ou 8, dans laquelle le diamètre extérieur du fond de l'emballage tampon (20) sur le côté extérieur est H1, et l'espacement entre les fonds d'emballages tampons adjacents (20) est H2, où H1 et H2 satisfont à la condition suivante : H1 ≤ H2.

11. Couche tampon d'emballage en papier (1), selon la revendication 7 ou 8, dans laquelle la couche de base (10) présente un avant (11) et un arrière (12), et l'emballage tampon (20) comporte un emballage tampon avant (20C) et un emballage tampon arrière (20D), dans laquelle l'emballage tampon avant (20C) est formé sur l'avant (11) de la couche de base (10), et l'emballage tampon arrière (20D) est formé sur l'arrière (12) de la couche de base (10).

12. Papier d'emballage (300), comportant :
une couche intérieure (100) et une couche extérieure (200) ; et
au moins une couche tampon d'emballage en papier (300), dans lequel l'au moins une couche tampon d'emballage (300) est placée entre la couche intérieure (100) et la couche extérieure (200), la couche tampon d'emballage en papier (300) comporte une couche de base (10) et une pluralité d'emballages tampons (20) et une pluralité de chambres à air (30) formées dans les emballages tampons (20), dans lequel la pluralité d'emballages tampons (20) sont formés sur la couche de base (10), les chambres à air (30) sont formées sur le côté intérieur des emballages tampons (20), l'emballage tampon (20) inclut une partie inférieure (21) et une partie supérieure (22) s'étendant d'un seul tenant vers l'extérieur à partir de la partie inférieure (21), la partie inférieure (21) de l'emballage tampon (20) s'étendant d'un seul tenant vers le haut depuis la couche de base (10) jusqu'à la partie supérieure (22) de l'emballage tampon (20), **caractérisé en ce que** l'emballage tampon (20) est en outre doté d'au moins une rainure de nervure (23), et l'au moins une rainure de nervure (23) est formée sur la surface de l'emballage tampon (20).

13. Papier d'emballage (300), selon la revendication 12, dans lequel la couche tampon d'emballage (300) comporte en outre une première couche tampon (300a) et une deuxième couche tampon (300b), dans lequel la première couche tampon (300a) et la deuxième couche tampon (300b) sont disposées de manière opposée, et le paquet tampon de la première couche tampon (300a) est placé dans l'espace d'intervalle de la deuxième couche tampon (300b), et le paquet tampon de la deuxième couche tampon (300b) est placé dans l'espace d'intervalle de la première couche tampon (300a).

14. Papier d'emballage (300), selon la revendication 13, dans lequel la couche tampon d'emballage (300) comporte en outre une couche tampon intérieure (300c) et une couche tampon extérieure (300d), dans lequel la taille de l'emballage tampon de la couche tampon intérieure (300c) est inférieure à la taille de l'emballage tampon de la couche tampon extérieure (300d), et l'emballage tampon de la couche tampon intérieure (300c) est manchonné à l'intérieur de la couche tampon extérieure (300d).

15. Papier d'emballage (300), selon la revendication 14, dans lequel la couche tampon intérieure (300c) et la couche intérieure (100) forment une chambre à air intérieure, la couche tampon intérieure (300c) et la couche tampon extérieure (300d) forment une chambre à air extérieure, et les chambres à air intérieure et extérieure de la couche tampon d'emballage (300) forment une structure tampon à double chambre à air.
